# EUROPÄISCHE PATENTANMELDUNG

(11) **EP 1 557 313 A2**
(43) Veröffentlichungstag der Anmeldung: **27.07.2005**
(21) Anmeldenummer: 05000770.7
(22) Anmeldetag: 15.01.2005
(51) Int. Cl.: B60K 15/05

(54) **Tankklappensystem für ein Kraftfahrzeug**

(30) Priorität: 20.01.2004 DE 102004002818
(71) Anmelder: Opel Eisenach GmbH, 99817 Eisenach (DE)
(72) Erfinder: Hilss, Dirk, 64686 Lautertal (DE); Hoyer, Erich, 64569 Nauheim (DE)
(74) Vertreter: Daniel, Ulrich W.P., Dr.

(57) **Zusammenfassung**

Ein Tankklappensystem (1) für ein Kraftfahrzeug ist mit einer Tankklappe (2), einem an dieser Tankklappe (2) befindlichen Tankklappenscharnier (3), dem bezüglich der Tankklappe (2) ein Verriegelungsmechanismus (4) gegenüberliegend angeordnet ist, und einem elektromotorischen Stellantrieb (5) zur Betätigung des Verriegelungsmechanismusses (4) versehen. Zum einfachen und kompakten Aufbau ist und zur leichten Montage ist der elektromotorische Stellantrieb (5) auf der Seite des Tankklappenscharniers (3) angeordnet.

## Beschreibung

Die Erfindung bezieht sich auf ein Tankklappensystem für ein Kraftfahrzeug mit einer Tankklappe, einem an dieser Tankklappe befindlichen Tankklappenscharnier, dem bezüglich der Tankklappe ein Verriegelungsmechanismus gegenüberliegend angeordnet ist, und einem elektromotorischen Stellantrieb zur Betätigung des Verriegelungsmechanismusses.

In der Praxis ist es zunehmend üblich, in ein Tankklappensystem für ein Kraftfahrzeug zumindest einen elektromotorischen Stellantrieb mit einzubeziehen. Der elektromotorische Stellantrieb dient entweder dazu, die Tankklappe zu verschwenken oder die Tankklappe zu verund entriegeln oder beides gleichzeitig. Gewöhnlich ist ein vorhandener Verriegelungsmechanismus der Schwenkachse der Tankklappe hinsichtlich des Einfüllstutzens für den Treibstoff gegenüberliegend angeordnet.

Die EP 0 990 548 A2 offenbart eine Tankklappeneinheit zum Einbau in ein Kraftfahrzeug, die einen Muldenkörper umfasst, an dem eine Tankklappe schwenkbar angebracht ist, auf die ein Stellmotor einwirkt. Der Stellmotor ist senkrecht zur Schwenkachse an deren unteren Ende angeordnet. Nach dem Einbau der Tankklappeneinheit in das Kraftfahrzeug schwenkt der Stellmotor die Tankklappe zum Öffnen und Schließen vom Tankdeckel weg bzw. auf den Tankdeckel zu, und zwar aufgrund einer Betätigung eines Schalters im Fahrzeuginneren. Der Stellmotor bildet einen Teil der vormontierten Tankklappeneinheit.

Aus der EP 0 608 527 B1 ist ein Tankverschlusssystem für einen Kraftstoffbehälter eines Kraftfahrzeuges mit einem Einfüllstutzen und einem diesen dichtend verschließenden Tankdeckel bekannt, der mit einer um eine Drehachse schwenkbaren Tankklappe eine Einheit bildet, die mittels eines Antriebsmotors zur Freigabe oder zum Verschließen des Einfüllstutzens zu betätigen ist. In einer Ausführungsform ist die karosseriefeste Drehachse dem Verriegelungsmechanismus, bestehend aus einem Verriegelungsbolzen und einem Fanghaken, bezüglich des Tankdeckels gegenüberliegend angeordnet.

Die DE 101 60 652 A1 zeigt ein Kraftfahrzeug mit einer Tankklappe im Bereich eines hinteren Kotflügels unmittelbar angrenzend zu einer auf dieser Fahrzeugseite befindlichen Rückleuchte. Die Tankklappe wird zum Öffnen in Richtung der Fahrzeugfront geschwenkt. Ein elektrischer Stellmotor ver- und entriegelt über einen Verriegelungsmechanismus die Tankklappe. Der Stellmotor und die auf der Fahrzeugseite der Tankklappe befindliche angrenzende Rückleuchte des Kraftfahrzeuges bilden eine Baueinheit und verkürzen somit den mechanischen Wirkungsweg zwischen Stellmotor und Verriegelungsmechanismus auf ein Minimum. Der Stellmotor und der Verriegelungsmechanismus sind einem Tankklappenscharnier bezüglich der Tankklappe im geschlossenen Zustand gegenüberliegend angeordnet.

Im Weiteren offenbart die DE 101 15 153 A1 eine Vorrichtung zum Ver- und/oder Entriegeln einer Tankklappe, die eine Tankmulde über einen elektromotorischen Stellantrieb verschließt. Der Stellantrieb ist auf einem Montageteil an der Tankmulde in unmittelbarer Nähe zu einem Verriegelungsmechanismus mit Stößel und Anlaufschräge befestigt. Der Stellantrieb befindet sich auf der gegenüberliegenden Seite einer Schwenkachse für die Tankklappe bezüglich der Tankmulde.

Es ist Aufgabe der Erfindung, ein verbessertes Tankklappensystem der eingangs genannten Art zu schaffen, dass einfacher und kompakter aufgebaut und zudem leicht zu montieren ist.

Erfindungsgemäß wird die Aufgabe dadurch gelöst, dass der elektromotorische Stellantrieb auf der Seite des Tankklappenscharniers angeordnet ist.

Das Tankklappenscharnier benötigt aufgrund des Scharnierbügels einen entsprechenden Bauraum. Die dadurch entstehenden Hohlräume können zumindest zum Teil für den elektromotorischen Stellantrieb genutzt werden. Somit wird der für den Stellantrieb erforderliche Bauraum zum Tankklappenscharnier verlagert und der verbrauchte Bauraum am Verriegelungsmechanismus entsprechend gesenkt. Der Verriegelungsmechanismus wird über ein mechanisches Verbindungsglied vom Stellantrieb betätigt.

Die Vorteile der Erfindung sind, ein geringerer benötigter Bauraum auf der Seite des Verriegelungsmechanismusses und durch die Zusammenlegung, also einer Konzentration, der schwereren mechanischen Elemente, wie Scharnier und Stellantrieb, eine Erleichterung der Montage des Tankklappensystems.

Zweckmäßigerweise ist das Tankklappenscharnier in Bezug auf das Tankklappensystem in Fahrtrichtung des Kraftfahrzeuges nach vorne angeordnet. Eine solche Anordnung senkt das Risiko der Beschädigung der Tankklappe, denn sollte sich das Kraftfahrzeug nach vorne bewegen, bevor die Tankklappe nach einem Öffnen wieder geschlossen wurde, so klappt die Tankklappe bei geringem entgegenstehenden Widerstand ohne Beschädigung wieder zu. Der Widerstand kann beispielsweise bereits der Luftwiderstand bei schneller Autofahrt sein.

Da bei Kraftfahrzeugen das Tankklappensystem zunehmend am hinteren Fahrzeugende angeordnet ist, vgl. die oben genannte DE 101 60 652 A1, da sich dadurch Vereinfachungen beim Tiefziehen der Bleche ergeben, sich dort jedoch im Fahrzeuginneren das Rückleuchtegehäuse befindet, ist eine Kombination von Rückleuchtegehäuseplatte und Stellmotor, wie in der letztgenannten Patentanmeldung vorgeschlagen, nicht mehr erforderlich, da erfindungsgemäß, im Gegensatz zum oben genannten Stand der Technik, der elektromotorische Stellantrieb in Fahrzeugfahrtrichtung weiter nach vorne verlegt ist. Die Baugruppen Rückleuchte und Tankklappensystem sind deshalb (wieder) funktional getrennt. Ein weiterer Vorteil ist die unkompliziertere Baugruppenanordnung (Package) am hintersten Kotflügelteil im Grenzbereich zur Rückleuchte. Durch diese Anordnung kann auch der Gepäckraum des Kraftfahrzeuges vergrößert werden.

Bevorzugt umfasst die Verbindung zwischen dem elektromotorischen Stellantrieb und dem Verriegelungsmechanismus ein mechanisches Verbindungsglied, insbesondere einen Bowdenzug (Seilzug). Dieses ist aufgrund der räumlichen Trennung von elektrischem Stellantrieb und Verriegelungsmechanismus nötig, um die mechanische Ver- und Entriegelungsbewegung vom Stellantrieb zum Verriegelungsmechanismus zu übertragen. Ein Bowdenzug ist preiswert und arbeitet zuverlässig. Außerdem lässt er auch leichte Radien zum Richtungswechsel zu, da im Regelfall die Ansteuerung des Verriegelungsmechanismusses aus einer anderen Richtung erfolgt, als der elektrische Stellantrieb bereitstellt, weil der elektrische Stellantrieb bauraumoptimiert angeordnet ist.

Bei einer alternativen Ausführungsform umfasst die Verbindung zwischen dem elektromotorischen Stellantrieb und dem Verriegelungsmechanismus eine Gliederkette. Dadurch sind Richtungswechsel mit einem größeren Winkel auf kleinerem Raum im Vergleich zu einem Bowdenzug möglich. Denkbar ist auch eine Kombination aus Gliederkette und Seilzug. Damit werden die Vorteile dieser mechanischen Elemente verbunden.

In weiterer Ausgestaltung bildet der elektromotorische Stellantrieb mit dem Tankklappenscharnier ein in sich geschlossenes, vormontierbares Modul. Dadurch erleichtert sich die Montage beim Einbau des Tankklappensystems und der Bauraum wird noch besser optimiert.

Vorteilhaft ist es, wenn das Tankklappensystem als montagegerechtes Modul ausgebildet ist. Dann kann das ganze Tankklappensystem-Modul in einem Montagearbeitsschritt im Kraftfahrzeug montiert werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

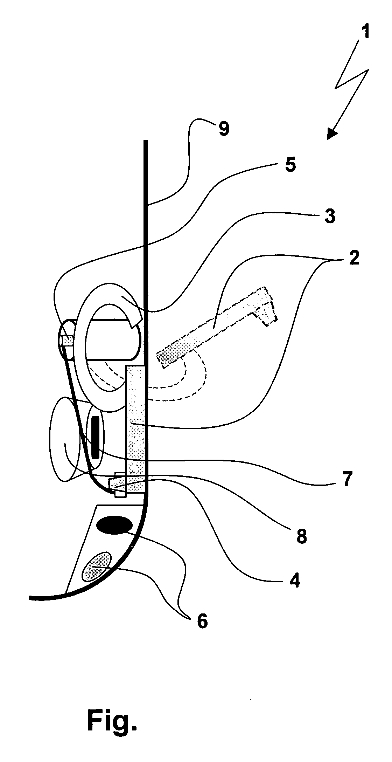

Die Erfindung wird im Folgenden anhand eines Ausführungsbeispieles unter Bezugnahme auf die zugehörige Zeichnung näher erläutert. Die einzige Figur zeigt eine schematische Darstellung eines erfindungsgemäßen Tankklappensystems für ein Kraftfahrzeug in einem rückwärtigen Teil einer rechten Fahrzeugecke in der Draufsicht

Einer Fahrzeugaußenwand 9 ist an eine Rückleuchte 6 direkt anschließend ein Tankklappensystem 1 zugeordnet, das eine Tankklappe 2 umfasst, an der ein Tankklappenscharnier 3 befestigt ist. Das Tankklappenscharnier 3 ist in Bezug auf das Tankklappensystem 1 in Fahrtrichtung des Kraftfahrzeuges nach vorne angeordnet. Ein Verriegelungsmechanismus 4 ist auf der gegenüberliegenden Seite des Tankklappenscharniers 3 vorgesehen. Ein Tankeinfüllstutzen ist aus Übersichtlichkeitsgründen nicht gezeigt, stattdessen ist der darauf sitzende Tankdeckel 8 dargestellt. Der Verriegelungsmechanismus 4 verriegelt und entriegelt die Tankklappe. Der Verriegelungsmechanismus 4 wird über einen Bowdenzug 7 von einem elektromotorischen Stellantrieb 5 betätigt. Der Bowdenzug 7 kann ein Stahl- oder ein Kunststoffseil umfassen.

Das Tankklappensystem 1 ist vorteilhafterweise als Modul mit dem Stellantrieb 5, dem Bowdenzug 7, dem Tankklappenscharnier 3 und der Tankklappe 2 vormontiert und wird demzufolge bei der Endmontage als ganze Einheit eingesetzt. Verbindungen zwischen den Baugruppen Rückleuchte 6 und Tankklappensystem 1 bestehen nicht. Die Baugruppen sind jeweils nach ihrer Funktion räumlich getrennt und können auch getrennt montiert bzw. später repariert werden. In gestrichelter Linie ist die Tankklappe 2 und das Tankklappenscharnier 3 im ausgeklappten Zustand gezeigt.

Wenn die Tankklappe 2 entriegelt ist, besteht ein Zugang zum schematisch angedeuteten Tankdeckel 8. Der Stellantrieb 5 ist mit der Zentralverriegelung des Kraftfahrzeuges in einer aus dem Stand der Technik bekannten Weise gekoppelt.

Aufgrund der Anordnung des Tankklappensystems 1 am hinteren Ende eines hinteren Kotflügels angrenzend zu der Rückleuchte 6 auf der einen Fahrzeugseite ergeben sich Vereinfachungen und Erleichterungen beim Karosserieaufbau, insbesondere beim Tiefziehen der Karosseriebleche. Die Bleche können somit kostengünstiger gefertigt werden. Bei einem Aufbau eines Tankklappensystems 1 mit einem Stellantrieb 5 auf der Gehäuseeinheit der Rückleuchte 6 gemäß dem Stand der Technik kann das Tankklappensystem 1 nicht direkt an die Rückleuchte 6 verlagert werden, da der Stellantrieb 5 einen gewissen Bauraum erfordert, oder wenn der Stellantrieb trotzdem auf der Gehäuseeinheit montiert würde, würde der Gepäckraum verkleinert werden, was nicht erwünscht ist. Durch die Verlagerung des Stellantriebs 5 zum Tankklappenscharnier 3 wird ein Freiraum im Bereich der Rückleuchte 6 geschaffen, der Vorteile für das Package bringt und beispielsweise als größerer Gepäckraum genutzt werden kann.

### Bezugszeichenliste

- 1.: Tankklappensystem
- 2.: Tankklappe
- 3.: Tankklappenscharnier
- 4.: Verriegelungsmechanismus
- 5.: Elektromotorischer Stellantrieb
- 6.: Rückleuchte
- 7.: Bowdenzug
- 8.: Tankdeckel
- 9.: Fahrzeugaußenhaut

## Patentansprüche

1. Tankklappensystem für ein Kraftfahrzeug mit einer Tankklappe (2), einem an dieser Tankklappe (2) befindlichen Tankklappenscharnier (3), dem bezüglich der Tankklappe (2) ein Verriegelungsmechanismus (4) gegenüberliegend angeordnet ist, und einem elektromotorischen Stellantrieb (5) zur Betätigung des Verriegelungsmechanismusses (4), **dadurch gekennzeichnet, dass** der elektromotorische Stellantrieb (5) auf der Seite des Tankklappenscharniers (3) angeordnet ist.

2. Tankklappensystem nach Anspruch 1 **dadurch gekennzeichnet, dass** das Tankklappenscharnier (3) in Bezug auf das Tankklappensystem in Fahrtrichtung des Kraftfahrzeuges nach vorne angeordnet ist.

3. Tankklappensystem nach Anspruch 1 oder 2 **dadurch gekennzeichnet, dass** die Verbindung zwischen dem elektromotorischen Stellantrieb (5) und dem Verriegelungsmechanismus (4) ein mechanisches Verbindungsglied, insbesondere ein Bowdenzug, ist.

4. Tankklappensystem nach Anspruch 1 bis 3 **dadurch gekennzeichnet, dass** die Verbindung zwischen dem elektromotorischen Stellantrieb (5) und dem Verriegelungsmechanismus (4) eine Gliederkette ist.

5. Tankklappensystem nach einem der Ansprüche 1 bis 4 **dadurch gekennzeichnet, dass** der elektromotorische Stellantrieb (5) mit dem Tankklappenscharnier (3) ein in sich geschlossenes, vormontierbares Modul bildet.

6. Tankklappensystem nach einem der Ansprüche 1 bis 5, **dadurch gekennzeichnet, dass** das Tankklappensystem (1) als montagegerechtes Modul ausgebildet ist.
